# EUROPÄISCHE PATENTANMELDUNG

(11) **EP 1 959 538 A2**
(43) Veröffentlichungstag der Anmeldung: **20.08.2008**
(21) Anmeldenummer: 08100268.5
(22) Anmeldetag: 09.01.2008
(51) Int. Cl.: H02K 1/02, H02K 1/12

(54) **Elektrische Maschine mit Ferrofluid enthaltenden Komponenten**

(30) Priorität: 15.02.2007 DE 102007007559
(71) Anmelder: SIEMENS AKTIENGESELLSCHAFT, 80333 München (DE)
(72) Erfinder: Wöhner, Norbert, 97618, Heustreu (DE)

(57) **Zusammenfassung**

Die Erfindung betrifft eine elektrische Maschine (15) mit einem Primärteil (10) und einem Sekundärteil (19), wobei Primärteil (10) und Sekundärteil (19) durch einen Luftspalt voneinander beabstandet sind und relativ zueinander bewegbar sind, wobei das Primärteil (10) und/oder das Sekundärteil (19) Mittel zur Generierung magnetischer oder elektromagnetischer Felder aufweisen, wobei das Primärteil (10) und das Sekundärteil (19) Flussleitmittel zur Führung eines magnetischen Hauptflusses aufweisen, und wobei der magnetische Hauptfluss zumindest abschnittsweise mittels eines Ferrofluids (14) geführt wird.

## Beschreibung

Die Erfindung betrifft eine elektrische Maschine mit einem Primärteil und einem Sekundärteil, wobei Primärteil und Sekundärteil durch einen Luftspalt voneinander beabstandet sind und relativ zueinander bewegbar sind, wobei das Primärteil und/oder das Sekundärteil Mittel zur Generierung magnetischer oder elektromagnetischer Felder aufweisen und wobei das Primärteil und das Sekundärteil Flussleitmittel zur Führung eines magnetischen Hauptflusses aufweisen.

Elektrische Maschinen weisen ein Primärteil und ein Sekundärteil auf. Das Sekundärteil ist beispielsweise ein Läufer einer rotatorisch arbeitenden elektrischen Maschine oder auch ein bewegtes Teil eines Linearmotors. Das Primärteil ist beispielsweise als Ständer bzw. als feststehendes Teil mit einer ein- oder mehrphasigen Wicklung ausgebildet. Bei Linearmotoren kann sowohl das Primärteil als auch das Sekundärteil als bewegtes Teil ausgebildet sein.

Bei rotatorisch ausgeführten elektrischen Maschinen steht der Ständer dem Läufer gegenüber, wobei Ständer und Läufer durch einen Luftspalt voneinander beabstandet sind. Sowohl der Ständer als auch der Läufer weisen magnetische Mittel zur Generierung und/oder Führung magnetischer Felder bzw. des magnetischen Flusses auf.

Ständer und Läufer für elektrische Maschinen weisen i. d. R. ein Blechpaket, bestehend aus einzelnen Elektroblechen, auf, wobei am Blechpaket die Wicklung oder auch Permanentmagnete zur Generierung magnetischer Felder angeordnet sind.

Die Einzelbleche für Ständer und Läufer werden i. d. R. einzeln gestanzt und beispielsweise über Stanzpaketieren, Schweißen oder Klammern zu Blechpaketen zusammengefügt. Es entsteht ein hoher fertigungstechnischer Aufwand, da zum Stanzen der Einzelbleche geeignete Stanzwerkzeuge, beispielsweise Folgeschnittwerkzeuge notwendig sind, wobei für jede Ausführung einer elektrischen Maschine, wie beispielsweise 2-polig, 4-polig usw., verschiedene Stanzwerkzeuge notwendig sind.

Um den magnetischen Hauptfluss zwischen Ständer und Läufer zu führen, werden bei wicklungstragenden Ständern/Läufern üblicherweise gezahnte Bleche verwendet. In den Nuten der Bleche bzw. des Blechpakets ist die Wicklung angeordnet. Nach dem Isolieren der Nuten wird die Wicklung beispielsweise über Einziehen eingebracht.

In einem Blechpaket aus Eisen entstehen im Wesentlichen auf zwei Arten Verluste. Der Hauptteil der Eisenverluste wird durch die Ummagnetisierung der Bleche im Takt der Netzfrequenz erzeugt. Des Weiteren entstehen Eisenverluste aufgrund von Wirbelströmen im Blechpaket. Um die entstehenden Verluste möglichst gering zu halten, sollten die Blechpakete aus möglichst dünnen, voneinander isolierten Einzelblechen hergestellt werden. Je dünner die einzelnen Bleche ausgeführt sind, desto geringer sind die Verluste.

Es besteht die Möglichkeit, das Ständer- und Läuferblechpaket beispielsweise aus Verbundwerkstoffen, wie beispielsweise Composite-Material (Kunststoff-Verbundwerkstoff) herzustellen. Dadurch kann der Einsatz von Stanzwerkzeugen vermieden werden, allerdings sind dann Spritzgießformen notwendig.

Die Aufgabe der vorliegenden Erfindung ist es, eine elektrische Maschine bereitzustellen, deren Primär- und/oder Sekundärteil möglichst wenige Verluste aufgrund von Ummagnetisierung und Wirbelströmen aufweisen, und die einfach und kostengünstig herzustellen ist.

Diese Aufgabe wird durch die Merkmale des Patentanspruchs 1 gelöst. Vorteilhafte Weiterbildungen sind den Unteransprüchen zu entnehmen.

Die erfindungsgemäße elektrische Maschine kann eine rotatorische oder ein lineare Maschine sein. Vorzugsweise ist die elektrische Maschine rotatorisch ausgebildet, wobei das Primärteil als Ständer und das Sekundärteil als Läufer ausgebildet ist.

Die erfindungsgemäße elektrische Maschine weist ein Primärteil und ein Sekundärteil auf, welche durch einen Luftspalt voneinander beabstandet sind und relativ zueinander bewegbar sind. Primärteil und/oder Sekundärteil weisen Mittel zur Generierung magnetischer oder elektromagnetischer Felder auf. Derartige Mittel sind beispielsweise eine ein- oder mehrphasige Wicklung oder Permanentmagnete. Ferner weisen Primärteil und Sekundärteil Flussleitmittel zur Führung eines magnetischen Hauptflusses auf.

Der magnetische Hauptfluss verkettet die magnetischen bzw. elektromagnetischen Felder von Primär- und Sekundärteil über den Luftspalt hinweg. Daneben existieren Streuflüsse, welche nur im Primär- oder Sekundärteil verkettet sind und nicht über den Luftspalt gehen.

Erfindungsgemäß wird der magnetische Hauptfluss zwischen Primärteil und Sekundärteil zumindest abschnittsweise mittels eines Ferrofluids geführt. Der magnetische Hauptfluss wird demnach nicht ausschließlich mittels der Blechpakete geführt, sondern ganz oder teilweise mittels einer Flussleitflüssigkeit, dem Ferrofluid.

Ein Ferrofluid bezeichnet eine Flüssigkeit, welche auf ein magnetisches Feld reagiert. Ferrofluide Stoffe bestehen aus magnetischen Partikeln, die in einer Trägerflüssigkeit kolloidal suspendiert sind. Die Partikel werden i. d. R. mit einer polymeren Oberflächenbeschichtung stabilisiert.

Ferrofluide sind stabile Dispersionen, was bedeutet, dass sich die Partikel nicht mit der Zeit absetzen und selbst in extrem starken Magnetfeldern nicht aneinander anlagern und sich von der Flüssigkeit als andere Phase abscheiden.

Ferrofluide sind superparamagnetisch und besitzen eine sehr geringe Hysterese. Die Teilchen bestehen normalerweise aus Eisen, Magnetit oder Kobalt und weisen typischerweise einen Durchmesser von 5 nm bis 10 nm (Nanometer) auf. Die umgebende Flüssigkeit ist beispielsweise Öl oder Wasser, seltener Wachs. Ferner sind der Flüssigkeit Tenside zugesetzt, um eine Stabilität der Suspension zu erreichen.

Das Primärteil weist erste Flussleitmittel und das Sekundärteil zweite Flussleitmittel auf, wobei die ersten Flussleitmittel und/oder die zweiten Flussleitmittel mittels des Ferrofluids ausgebildet sind. Demnach weist entweder nur das Primärteil oder nur das Sekundärteil oder Primär- und Sekundärteil Ferrofluid auf. Dazu weist vorteilhafterweise das Primärteil oder das Sekundärteil oder beide Teile jeweils zumindest einen Füllraum zur Aufnahme des Ferrofluids auf. Ein derartiger Füllraum wird beispielsweise durch das Innere eines Hohlkörpers ausgebildet.

Vorzugsweise weist das Primärteil einen hohlzylindrisch ausgebildeten Wicklungsträger auf, wobei am Wicklungsträger eine ein- oder mehrphasige Wicklung angeordnet ist. Die Wicklung wird an der Außenfläche des Hohlzylinders in Form einer konzentrierten Wicklung (Polspulenwicklung) oder einer verteilten Wicklung (Schleifenwicklung) angebracht. Dazu weist der Wicklungsträger vorteilhafterweise mehrere Zapfen zur Aufnahme und Fixierung der Wicklung auf. Die Zapfen sind an den stirnseitigen Bereichen des Hohlzylinders angeordnet, so dass die einzelnen Spulen der Wicklung um die Zapfen gewickelt werden. Die Herstellung der Wicklung wird durch das direkte Bewickeln des Wicklungsträgers vereinfacht, da keine Spulen separat hergestellt und anschließend montiert werden müssen. Weiterhin sind Nuten für die Wicklung nicht notwendig, da die Spulen einfach um die Zapfen gewickelt werden.

Weiterhin weist das Primärteil vorzugsweise eine hohlzylindrisch ausgebildete Außenhülse auf, wobei die Außenhülse derart ausgebildet ist, dass der Wicklungsträger mit angeordneter Wicklung innerhalb der Außenhülse anordenbar ist.

Ist der Wicklungsträger mit angeordneter Wicklung innerhalb der Außenhülse angeordnet, so spannt sich zwischen Wicklungsträger und Außenhülse der Füllraum für das Ferrofluid auf.

In einer vorteilhaften Ausgestaltung weisen Wicklungsträger, auch als Innenhülse bezeichnet, und Außenhülse im Wesentlichen die gleiche axiale Länge auf. An den beiden Stirnseiten von Innen- und Außenhülse sind Dichtmittel angeordnet, so dass Wicklungsträger, Außenhülse und Dichtmittel eine geschlossene Kontur bilden. Derartige Dichtmittel sind beispielsweise Dichtplatten aus Kunststoff, die ringförmig oder kreisförmig ausgebildet sind, wobei die ringförmige Dichtplatte mit Innen- und Außenhülse abschließt.

Zweckmäßigerweise sind die stirnseitigen Dichtmittel so ausgebildet, dass ein Wicklungskabel, insbesondere ein Wicklungsende, der elektrischen Maschine, insbesondere des Primärteils, herausgeführt werden kann. Die Dichtmittel, beispielsweise Dichtplatten, können Öffnungen, wie Bohrungen, aufweisen, durch welche das Wicklungsende herausgeführt wird. Nachdem das Wicklungsende durch eine Bohrung herausgeführt ist, muss diese flüssigkeitsdicht abgedichtet, d. h. verschlossen werden, da sich im Inneren von Innen-, Außenhülse und Dichtplatten das Ferrofluid befindet. Es besteht die Möglichkeit, dass Teile der stirnseitigen Abdichtungen bereits an der Innen- oder Außenhülse angebracht sind. Über das herausgeführte Wicklungskabel wird das Primärteil mit elektrischem Strom versorgt.

Nachdem die Wicklung am Wicklungsträger, d. h. der Innenhülse angeordnet ist, die Außenhülse über die Wicklung geschoben ist und die Dichtmittel angeordnet sind, wobei ein Wicklungskabel durch die stirnseitigen Dichtmittel oder die Außenhülse nach außen geführt ist, wird das Ferrofluid in den sich ergebenden Füllraum zwischen Wicklungsträger und Außenhülse eingefüllt. Dabei kann die Öffnung, die zur Durchführung des Wicklungskabels dient, gleichzeitig als Einfüllöffnung für das Ferrofluid dienen. In diesem Fall wird die Öffnung erst flüssigkeitsdicht verschlossen, nachdem das Ferrofluid eingefüllt ist. Es können aber andere Einfüllöffnungen für das Ferrofluid ausgebildet sein. Beispielsweise besteht die Möglichkeit, zunächst nur eines der beiden stirnseitigen Dichtmittel anzuordnen, dann den zylindrischen Körper senkrecht aufzustellen und das Ferrofluid einzufüllen und abschließend das zweite Dichtmittel, praktisch als Deckel, anzubringen.

Vorteilhafterweise ist die Zusammensetzung des Ferrofluids in Bezug auf die jeweilige Anwendung angepasst. Eine solche Anpassung kann beispielsweise durch die Anzahl der magnetischen Teilchen erzielt werden. Das Ferrofluid ist beispielsweise als ferromagnetisches oder superparamagnetisches Ferrofluid ausgebildet.

Durch den Einsatz von Flussleitflüssigkeiten, d. h. von Ferrofluiden, entstehen nur geringste Ummagnetisierungs- und Wirbelstromverluste im Primärteil und/oder Sekundärteil, so dass eine elektrische Maschine mit hohem Wirkungsgrad bereitgestellt werden kann.

Da die Wicklung allseitig vom Ferrofluid umgeben ist, ist ein optimaler magnetischer Hauptfluss gegeben, da keine Luftspalte im Primär- und/oder Sekundärteil existieren. Der Nutfüllfaktor ist somit sehr hoch und beträgt im Idealfall 100%. Gegenüber herkömmlichen Maschinen ist der Nutfüllfaktor wesentlich erhöht, wodurch der Wirkungsgrad der Maschine ebenso erhöht ist.

Für den Fall, dass die Wicklung gegenüber dem Ferrofluid isoliert werden soll, kann dies nach dem Herstellen der Wicklung beispielsweise durch Vergießen der Wicklung durchgeführt werden.

Vorzugsweise sind der Wicklungsträger (Innenhülse) und die Außenhülse Kunststoffformteile, d. h. aus Kunststoff hergestellt. Die Formgebung für Primär- und/oder Sekundärteil wird somit durch Formteile definiert. Dadurch ergibt sich ein vereinfachter und werkzeugarmer Herstellprozess für Primär- und/oder Sekundärpaket, da das Stanzen von Einzelblechen sowie das Paketieren entfällt. Weiterhin kann eine freie Formgebung gewählt werden. Primär- und/oder Sekundärteil können beispielsweise durch Spritzgießen hergestellt werden. Durch den Einsatz von kostengünstigen Spritzgießteilen werden aufwändige und somit teure Stanztechniken nicht mehr benötigt.

In einer weiteren vorteilhaften Ausgestaltung der Erfindung ist das Ferrofluid gleichzeitig als wärmeabführendes Medium ausgebildet. Somit schafft die Erfindung die Möglichkeit, das ohnehin vorhandene Ferrofluid zugleich auch für Kühlaufgaben einzusetzen. Erfüllt das Ferrofluid zugleich auch Kühlungsfunktionen, muss das Ferrofluid i. d. R. rückgekühlt werden, beispielsweise mittels Wärmetauscher und eines sekundären Kühlflüssigkeitskreislaufs oder mittels eines Wärmetauschers an Luft.

Da die Wicklung direkt im Ferrofluid liegt, kann die in der Wicklung entstehende Verlustwärme direkt über das Ferrofluid abgeführt werden. Durch diese optimierte Verlustwärmeabfuhr steigt der Wirkungsgrad bzw. die Leistung der elektrischen Maschine.

Vorzugsweise ist das Ferrofluid direkt oder indirekt an einen Kühlkreislauf der elektrischen Maschine angebunden. Beispielsweise ist das Ferrofluid im Ständerpaket an einen Kühlkreislauf der Maschine angeschlossen, wobei das Ferrofluid der Wärmeträger ist. Das erwärmte Ferrofluid wird aus dem Ständerpaket abgepumpt und durch kühles Ferrofluid ersetzt. Insbesondere sind Füllraum und Ferrofluid zugleich Bestandteil eines Kühlsystems der Maschine. Das Kühlsystem der Maschine kann im Wesentlichen ausschließlich mit dem Ferrofluid arbeiten. Es sind aber auch Kombinationen mit anderen, flüssigen oder gasförmigen Kühlmedien möglich.

Die erfindungsgemäße elektrische Maschine kann ein Elektromotor oder ein Generator zur Stromerzeugung oder auch eine Kombination aus beiden sein, die wahlweise als Motor oder Generator arbeitet.

Die erfindungsgemäße elektrische Maschine ist vorzugsweise als permanenterregte Synchronmaschine ausgebildet. Die elektrische Maschine kann als Außen- oder Innenläufermaschine ausgebildet sein. Vorzugsweise ist die Maschine als Innenläufermaschine ausgebildet. Der Stator, d. h. das Primärteil, ist als Ferrofluid-Komponente ausgebildet. Der Rotor, d. h. das Sekundärteil, ist als herkömmliches Blechpaket mit Permanentmagneten, ausgebildet. Daneben besteht die Möglichkeit, den Rotor einer Asynchronmaschine als Ferrofluid-Komponente auszubilden, wobei beispielsweise der fertige Kurzschlusskäfig in eine Hülse eingeschoben wird, die nach dem Verschließen mit Ferrofluid aufgefüllt wird.

In der nachfolgenden Beschreibung werden weitere Merkmale und Einzelheiten der Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:
- FIG 1: eine perspektivische Ansicht eines Wicklungsträgers für ein Primärteil einer erfindungsgemäßen elektrischen Maschine;
- FIG 2: eine Seitenansicht des Wicklungsträgers gem. FIG 1;
- FIG 3: einen Ausschnitt des Wicklungsträgers gem. FIG 2;
- FIG 4: eine perspektivische Ansicht einer Außenhülse für ein Primärteil einer erfindungsgemäßen elektrischen Maschine;
- FIG 5: eine perspektivische Ansicht eines Primärteils einer erfindungsgemäßen elektrischen Maschine;
- FIG 6: eine stirnseitige Ansicht des Primärteils gem. FIG 5;
- FIG 7: einen Ausschnitt eines Primärteils mit Kabeldurchführung;
- FIG 8: ein Primärteil einer erfindungsgemäßen elektrischen Maschine; und
- FIG 9: eine erfindungsgemäße elektrische Maschine.

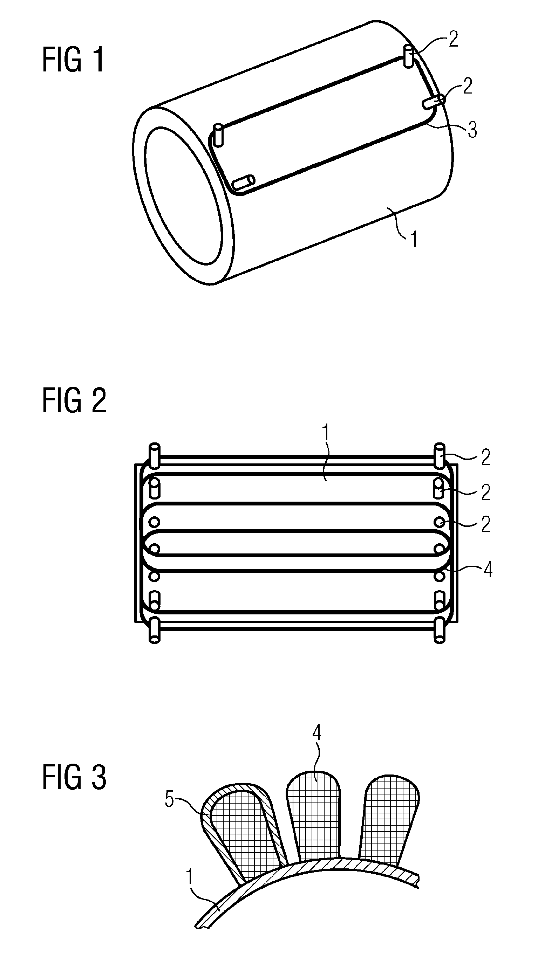

FIG 1 zeigt eine perspektivische Ansicht eines Wicklungsträgers 1 für ein Primärteil 10 (nicht gezeigt) einer erfindungsgemäßen elektrischen Maschine 15 (nicht gezeigt). Der Wicklungsträger 1 ist hohlzylindrisch ausgebildet und weist mehrere Zapfen 2 zur Aufnahme und Fixierung einer Wicklung auf. FIG 1 zeigt eine einzelne Spule 3, welche an den Zapfen 2 angeordnet ist. Der Wicklungsträger 1 mit Zapfen 2 ist als Kunststoffformteil ausgebildet.

FIG 2 zeigt den Wicklungsträger 1 mit vollständiger Wicklung 4. Die Wicklung 4 ist an der Außenfläche des hohlzylindrischen Wicklungsträgers 1 in Form einer Schleifenwicklung bzw. verteilter Wicklung angebracht. Die Zapfen 2 sind an den stirnseitigen Bereichen des Wicklungsträgers 1 angeordnet.

FIG 3 zeigt einen Ausschnitt des Wicklungsträgers 1 mit der Wicklung 4. Die Zapfen 2 sind nicht gezeigt. Die Wicklung 4 ist mit der Isolation 5 umhüllt. Mit der Isolation 5 wird die Wicklung 4 gegenüber dem nicht gezeigten Ferrofluid isoliert, beispielsweise wird die Wicklung vergossen oder umspritzt.

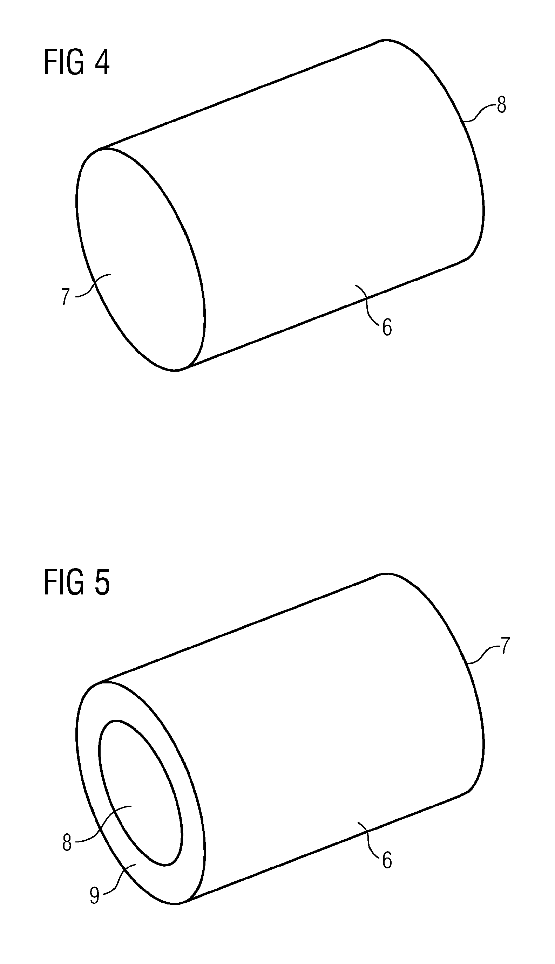

FIG 4 zeigt eine perspektivische Ansicht einer Außenhülse 6 für ein Primärteil 10 (nicht gezeigt) einer erfindungsgemäßen elektrischen Maschine 15 (nicht gezeigt). Die Außenhülse 6 ist ebenso hohlzylindrisch ausgebildet, wobei die Außenhülse 6 derart ausgebildet ist, dass der Wicklungsträger 1 mit angeordneter Wicklung 4 innerhalb der Außenhülse anordenbar ist. Die Außenhülse 6 weist die A-Seite 7 und die B-Seite 8 auf. Die A-Seite 7 ist im Wesentlichen vollständig offen, so dass der Wicklungsträger 1 von der A-Seite 7 in die Außenhülse 6 eingeschoben werden kann. Die B-Seite 8 dagegen ist so ausgebildet, dass bereits Dichtmittel 9 angeordnet sind. Der Wicklungsträger 1 wird von der A-Seite 7 her in die Außenhülse 6 in die Dichtmittel 9 eingeschoben, so dass bereits an der B-Seite 8 eine flüssigkeitsdichte Kontur realisiert ist. Die Verbindung zwischen Wicklungsträger 1 und Dichtmittel 9, welches als Dichtring ausgebildet ist, ist beispielsweise als Presspassung ausgebildet.

Die Außenhülse 6 ist als Kunststoffformteil ausgebildet, wobei die Dichtmittel 9 einteilig mit der Außenhülse 6 ausgebildet sind. Außenhülse 6 und Dichtmittel 9 sind ein Spritzgussformteil.

FIG 5 zeigt eine perspektivische Ansicht des Primärteils 10 einer erfindungsgemäßen elektrischen Maschine 15 (nicht gezeigt). Der Wicklungsträger 1 mit Zapfen 2 und einer Spule 3, welche eine Wicklung andeutet, und die Außenhülse 6 weisen im Wesentlichen die gleiche axiale Länge auf. Ist der Wicklungsträger 1 mit angeordneter Wicklung innerhalb der Außenhülse 6 angeordnet, so spannt sich zwischen Wicklungsträger 1 und Außenhülse 6 der Füllraum 11 für das Ferrofluid auf. An den beiden Seiten 7 und 8 sind nicht gezeigte Dichtmittel 9 angeordnet, so dass Wicklungsträger 1, Außenhülse 6 und Dichtmittel 9 eine geschlossene Kontur bilden.

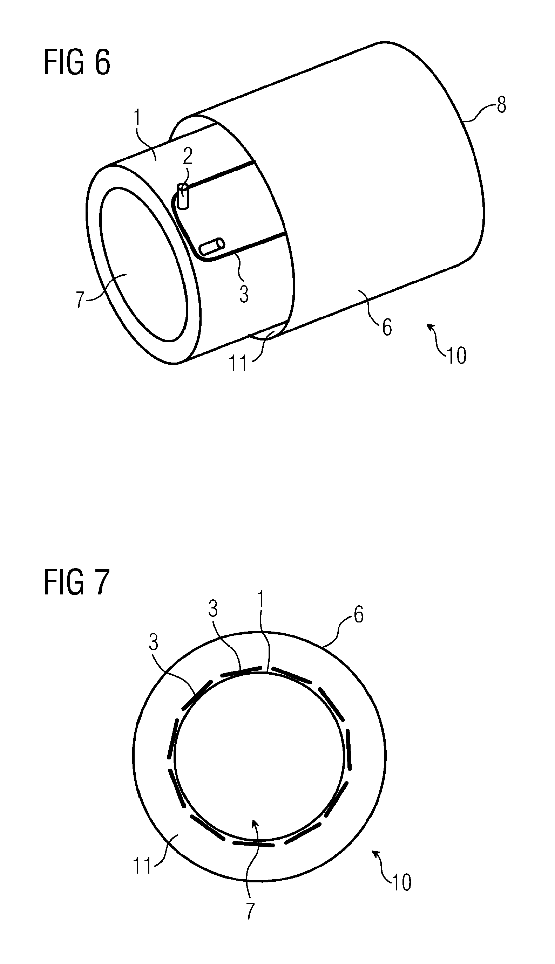

FIG 6 zeigt eine Ansicht auf die A-Seite 7 des Primärteils 10. Die Spulen 3 sind als konzentrierte Wicklung bzw. Zahnspulen ausgebildet. Der Füllraum 11 ist für das Ferrofluid vorgesehen. In FIG 6 ist gut zu sehen, dass die Spulen 3 bzw. die Wicklung 4 vollständig im Füllraum 11 liegen und somit nach Einfüllen des Ferrofluids vollständig vom Ferrofluid umschlossen sind. Da die Spulen 3 allseitig vom Ferrofluid umgeben sind, ist ein optimaler magnetischer Hauptfluss gegeben, da keine Luftspalte im Primärteil 10 existieren. Der Nutfüllfaktor ist somit sehr hoch und beträgt im Idealfall 100%. Das nicht gezeigte Ferrofluid im Füllraum 11 ist gleichzeitig als wärmeabführendes Medium ausgebildet. Durch diese direkte und somit optimierte Verlustwärmeabfuhr von der Wicklung 4 werden Wirkungsgrad bzw. Leistung erhöht.

FIG 7 zeigt einen Ausschnitt eines Primärteils 10 mit einer Kabeldurchführung. Das stirnseitige Dichtmittel 9 an der B-Seite 8 von Außenhülse 6 und Wicklungsträger 1 weist die Öffnung 12 auf, durch welche der Wicklungsstrang bzw. das Wicklungskabel 13 des Primärteils 10 herausgeführt ist. Über das herausgeführte Wicklungskabel 13 wird das Primärteil 10 mit elektrischem Strom versorgt. Nachdem das Wicklungskabel 13 durch die Öffnung 12 herausgeführt ist, muss diese flüssigkeitsdicht abgedichtet, d. h. verschlossen werden, da sich im Inneren von Wicklungsträger 1, Außenhülse 6 und Dichtmittel 9 das Ferrofluid befindet. Das nicht gezeigte Ferrofluid kann über die Öffnung 12 in den schematisch angedeuteten Füllraum 11 eingefüllt werden. Somit erfüllt die Öffnung zwei Funktionen, nämlich Kabelausführung und Einfüllöffnung.

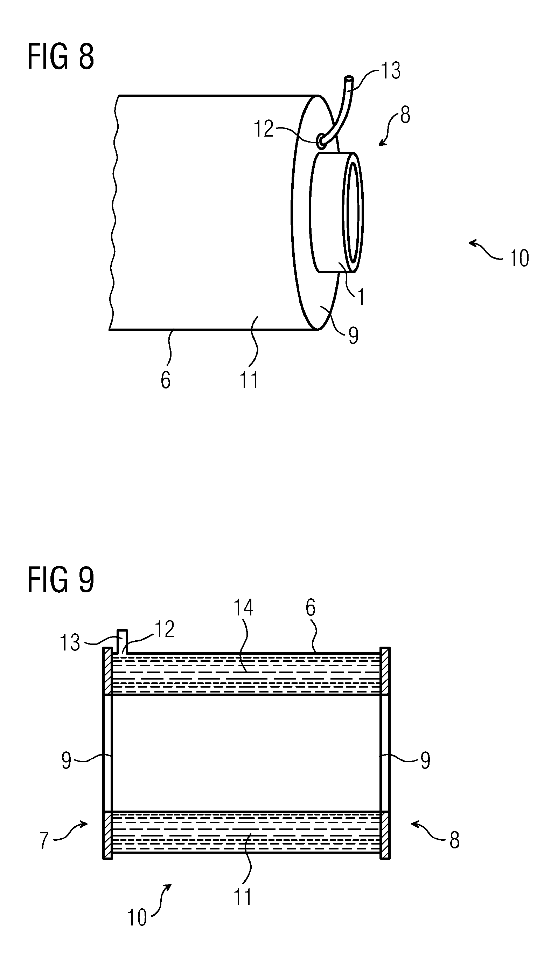

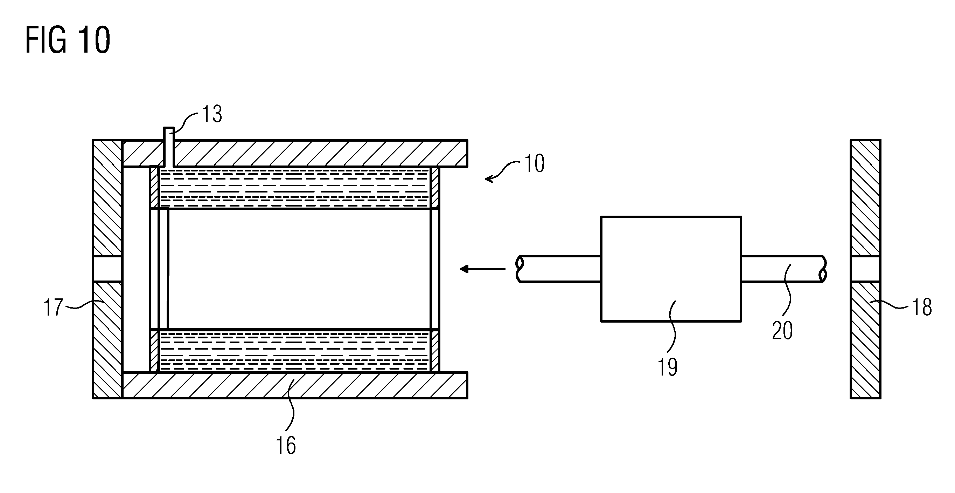

FIG 8 zeigt ein vollständiges Primärteil 10. Das Primärteil 10 weist die Öffnung 12 für die Herausführung des Wicklungskabels 13 diesmal auf der A-Seite 7 auf, wobei das Wicklungskabel 13 in Betrieb der elektrischen Maschine nach oben, d. h. oberhalb, geführt ist. Weiterhin sind die beiden stirnseitigen Dichtmittel 9 zu sehen, die Außenhülse 6 mit innen liegendem Wicklungsträger 1 verbinden, wodurch eine geschlossene Kontur entsteht. Der Füllraum 11 mit Ferrofluid 14 ist schematisch angedeutet.

FIG 9 zeigt eine erfindungsgemäße elektrische Maschine 15. Das Primärteil 10 ist im hohlzylindrischen Gehäuse 16 angeordnet, wobei das Gehäuse 16 eine Öffnung zur Durchführung des Wicklungskabels 13 aufweist. Die Öffnung des Gehäuses 16 entspricht im Wesentlichen der Öffnung 12 der Außenhülse, wobei beide Öffnungen nebeneinander angeordnet sind, so dass das Wicklungskabel 13 herausgeführt werden kann. Die elektrische Maschine 15 ist als Innenläufermaschine ausgebildet, so dass das zylindrische Sekundärteil 19, als Rotor ausgebildet, innerhalb des Primärteils 10 angeordnet ist, wobei Primär- und Sekundärteil 10, 19 mittels eines Luftspalts voneinander beabstandet sind. Der Rotor 19 ist an einer Rotorwelle 20 angeordnet, welche in den Lagerschilden 17 und 18 gelagert ist.

## Patentansprüche

1. Elektrische Maschine (15) mit einem Primärteil (10) und einem Sekundärteil (19), wobei Primärteil (10) und Sekundärteil (19) durch einen Luftspalt voneinander beabstandet sind und relativ zueinander bewegbar sind,
wobei das Primärteil (10) und/oder das Sekundärteil (19) Mittel zur Generierung magnetischer oder elektromagnetischer Felder aufweisen, wobei das Primärteil (10) und das Sekundärteil (19) Flussleitmittel zur Führung eines magnetischen Hauptflusses aufweisen,
**dadurch gekennzeichnet,**
**dass** der magnetische Hauptfluss zumindest abschnittsweise mittels eines Ferrofluids (14) geführt wird.

2. Elektrische Maschine (15) nach Anspruch 1,
**dadurch gekennzeichnet,**
**dass** das Primärteil (10) erste Flussleitmittel und das Sekundärteil (19) zweite Flussleitmittel aufweist, wobei die ersten Flussleitmittel und/oder die zweiten Flussleitmittel mittels des Ferrofluids (14) ausgebildet sind.

3. Elektrische Maschine (15) nach Anspruch 1 oder 2,
**dadurch gekennzeichnet,**
**dass** das Primärteil (10) zumindest einen Füllraum (11) zur Aufnahme des Ferrofluids (14) aufweist.

4. Elektrische Maschine (15) nach Anspruch 1, 2 oder 3,
**dadurch gekennzeichnet,**
**dass** das Sekundärteil (19) zumindest einen Füllraum zur Aufnahme des Ferrofluids (14) aufweist.

5. Elektrische Maschine (15) nach einem der vorhergehenden Ansprüche,
**dadurch gekennzeichnet,**
**dass** das Primärteil (19) einen hohlzylindrisch ausgebildeten Wicklungsträger (1) aufweist,
**dass** das Primärteil (10) als Mittel zur Generierung magnetischer Felder eine ein- oder mehrphasige Wicklung (4) aufweist, wobei die Wicklung (4) am Wicklungsträger (1) angeordnet ist.

6. Elektrische Maschine (15) nach einem der vorhergehenden Ansprüche,
**dadurch gekennzeichnet,**
**dass** das Primärteil (10) eine hohlzylindrisch ausgebildete Außenhülse (6) aufweist, wobei die Außenhülse (6) derart ausgebildet ist, dass der Wicklungsträger (1) mit angeordneter Wicklung (4) innerhalb der Außenhülse (6) anordenbar ist.

7. Elektrische Maschine (15) nach einem der vorhergehenden Ansprüche,
**dadurch gekennzeichnet,**
**dass** der Wicklungsträger (1) mit angeordneter Wicklung (4) innerhalb der Außenhülse (6) angeordnet ist und dass sich zwischen Wicklungsträger (1) und Außenhülse (6) der Füllraum (11) des Primärteils (10) aufspannt.

8. Elektrische Maschine (15) nach Anspruch 7,
**dadurch gekennzeichnet,**
**dass** der Wicklungsträger (1) und die Außenhülse (6) im Wesentlichen die gleiche axiale Länge aufweisen, wobei an Stirnseiten (7, 8) von Wicklungsträger (1) und Außenhülse (6) Dichtmittel (9) angeordnet sind, so dass Wicklungsträger (1), Außenhülse (6) und Dichtmittel (9) eine geschlossene Kontur bilden.

9. Elektrische Maschine (15) nach einem der vorhergehenden Ansprüche,
**dadurch gekennzeichnet,**
**dass** der Wicklungsträger (1) und die Außenhülse (6) Kunststoffformteile sind.

10. Elektrische Maschine (15) nach Anspruch 5,
**dadurch gekennzeichnet,**
**dass** der Wicklungsträger (1) mehrere Zapfen (2) zur Aufnahme und Fixierung der Wicklung (4) aufweist.

11. Elektrische Maschine (15) nach einem der vorhergehenden Ansprüche,
**dadurch gekennzeichnet,**
**dass** das Ferrofluid (14) gleichzeitig als wärmeabführendes Medium ausgebildet ist.

12. Elektrische Maschine (15) nach einem der vorhergehenden Ansprüche,
**dadurch gekennzeichnet,**
**dass** das Ferrofluid (14) Bestandteil eines Kühlsystems der elektrischen Maschine (15) ist.

13. Elektrische Maschine (15) nach einem der vorhergehenden Ansprüche,
**dadurch gekennzeichnet,**
**dass** das Sekundärteil (19) als Mittel zur Generierung magnetischer Felder Permanentmagnete aufweist.

14. Elektrische Maschine (15) nach einem der vorhergehenden Ansprüche,
**dadurch gekennzeichnet,**
**dass** die elektrische Maschine (15) rotatorisch ausgebildet ist, wobei das Primärteil (10) als Ständer und das Sekundärteil (19) als Läufer ausgebildet ist.
